# EUROPEAN PATENT SPECIFICATION

(11) **EP 2 405 614 B1**
(45) Date of publication and mention of the grant of the patent: **04.11.2015**
(21) Application number: 10748332.3
(22) Date of filing: 02.03.2010
(51) Int. Cl.: H04L 29/12

(54) **HOST COMMUNICATION METHOD, SYSTEM AND APPARATUS**
VERFAHREN, SYSTEM UND VORRICHTUNG FÜR HOST-KOMMUNIKATION
SYSTÈME, APPAREIL ET PROCÉDÉ DE COMMUNICATION D'HÔTE

(30) Priority: 04.03.2009 CN 200910078869
(43) Date of publication of application: 11.01.2012
(73) Proprietor: Huawei Technologies Co., Ltd., Longgang District Shenzhen, Guangdong 518129 (CN)
(72) Inventor: XU, Xiaohu, Shenzhen Guangdong 518129 (CN)
(74) Representative: Isarpatent
(86) International application number: PCT/CN2010/070837
(87) International publication number: WO 2010/099742

(56) References cited:
- WO-A1-2005/081466
- CN-A- 1 938 999
- CN-A- 101 120 572
- CN-A- 101 374 069
- US-A1- 2007 204 150
- US-A1- 2008 271 132
- US-B1- 7 333 510
- DACHENG ZHANG XIAOHU XU HUAWEI TECHNOLOGIES CO ET AL: "Investigation in HIP Proxies; draft-zhang-hip-investigation-proxy-00.txt ", INVESTIGATION IN HIP PROXIES; DRAFT-ZHANG-HIP-INVESTIGATION-PROXY-00.TXT INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2009 (2009-10-19), XP015064790, [retrieved on 2009-10-19]

## Description

### FIELD OF THE INVENTION

The present invention relates to the communications field, and in particular, to a host communication method, system, and device.

### BACKGROUND OF THE INVENTION

With the constant development of network communications technologies, an Internet Protocol (IP) address in the existing Internet architecture represents not only a host identity (intended for representing a session endpoint at a transport layer), but also a host locator (intended for routing and addressing of a packet in a routing system). Because an IP address bears semantics of both a host identity (ID) and a host locator, a series of problems occur, for example, poor route scalability and poor mobility support.

In a Host Identity Protocol (HIP), a host ID layer is introduced between a network layer and a transport layer of the existing Transmission Control Protocol/Internet Protocol (TCP/IP) stack, and a transport-layer session is bound only to the host ID. In HIP, the host ID layer separates the transport layer from the network layer which is closely coupled with the transport layer. In this way, the two functions of the IP address are separated; the IP address serves as only a locator available to the network layer and is exclusively used to route and forward packets; the host identification function of the IP address is undertaken by HIP, and the transport layer uses the host ID instead of the IP address as a host name.

HIP separates the transport layer from the network layer, and provides a secure method for host mobility and multi-homing on the Internet. In addition, HIP provides an encrypted host ID naming space, which makes it easier to authenticate both communication parties and implement secure and trustworthy network systems.

Hierarchical Routing Architecture (HRA) is another solution that separates the host ID from the host locator. One of the differences between HRA and HIP is: On the basis of HIP, the HRA modifies a 128-bit flat Host Identity Tag (HIT) in HIP to a hierarchical host ID. The hierarchical host ID includes two parts, in which the former part is an Administrative Domain (AD) ID, and the latter part is a Hash operation result of an AD ID and a public key. Because the host ID is hierarchical and routable on the Internet, and the hierarchical host ID has a special prefix that distinguishes the host ID from a general Internet Protocol version 6 (IPv6) address, a legacy IPv6 host can easily interwork with an HRA host.

Currently, HIP and the HRA separate the transport layer from the network layer, and separate the host ID from the host locator. However, no solution is available to communication between a legacy IPv6 host and a new host, where the legacy IPv6 host does not separate the host ID from the host locator but the new host separates the host ID from the host locator. Consequently, the new host can hardly communicate or is hardly compatible with the legacy IPv6 host.

US 2007/204150A1 discloses a legacy MS 102 initiates a PDP context activation procedure. Then an identifier is generated and associated with the legacy MS 102, and sent to the legacy MS 102 as the address to be used in the PDP context. Where IPv6 is being used at the legacy MS 102, the identifier is a Host Identifier Tag (HIT), which is of the same length as an IPv6 address. Where IPv4 is being used at the legacy MS 102, the identifier is a Local Scope Identifier (LSI), which is of the same length as an IPv4 address. The legacy MS 102 stores the identifier for use as the source address in a subsequent session initiation message. Therefore it is important the length of the identifier is the same as the source address field of the addressing scheme used by the legacy MS 102.

WO 2005/081466 A1 discloses a first host which is not HIP enabled sends a query to resolve the IP address of a second host which is HIP enabled. A proxy retrieves an IP address and HIT associated with the second host. The proxy returns a substitute IP address associated with the second host, and maintains a mapping between the substitute IP address, the retrieved IP address and the retrieved HIT. The first host sends a session initiation message including as its destination address the substitute IP address. The proxy receives the session initiation message and uses the mapping to negotiate a secure HIP connection between the proxy and the second host.

US 2008/271132 A1 discloses the legacy MS 102 initiates a PDP context activation procedure so that an identifier is generated and associated with the legacy MS 102. The identifier is sent to the legacy MS 102 as the address to be used in the PDP context. It is important that the length of the identifier is the same as the source address field of the addressing scheme used by the legacy MS 102.

### SUMMARY OF THE INVENTION

To implement communication between a legacy host and a new host in a new network architecture that separates a host ID from a host locator, embodiments of the present invention provide a host communication method, system, and device. The technical solutions are implemented in accordance with independent claims 1, 3, 7-9 and 12.

In the technical solutions disclosed herein, the packet sent by the source host is converted into a packet compatible with the destination host, which enables data communication between the legacy host and the new host, improves system scalability, and provides better mobility support.

### BRIEF DESCRIPTION OF THE DRAWINGS

FIG. 1 is a schematic flowchart of a method according to a first embodiment of the present invention;
FIG. 2 is a schematic flowchart of a method according to a second embodiment of the present invention;
FIG. 3 is a schematic diagram of interaction for sending a packet from a legacy host to a new host according to the second embodiment of the present invention;
FIG. 4 is a schematic diagram of interaction for sending a response packet from a new host to a legacy host according to the second embodiment of the present invention;
FIG. 5 is a schematic flowchart of a method according to a third embodiment of the present invention;
FIG. 6 is a schematic diagram of interaction for sending a packet from a new host to a legacy host according to the third embodiment of the present invention;
FIG. 7 is a schematic diagram of interaction for sending a response packet from a legacy host to a new host according to the third embodiment of the present invention;
FIG. 8 is a schematic structural diagram of a system according to a fourth embodiment of the present invention; and
FIG. 9 is a schematic structural diagram of a proxy server according to a fifth embodiment of the present invention.

### DETAILED DESCRIPTION OF THE EMBODIMENTS

To make the technical solutions, objectives, and merits of the present invention clearer, the following describes the embodiments of the present invention in detail with reference to the accompanying drawings.

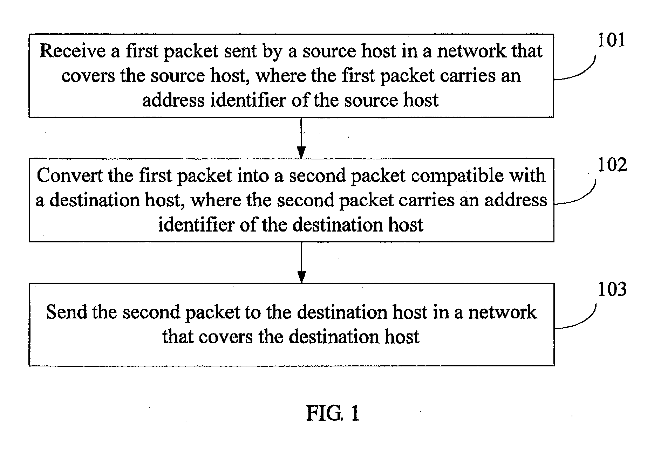

An embodiment of the present invention provides a method for communication between a source host and a destination host. When the source host is a legacy host, the destination host is a new host; when the source host is a new host, the destination host is a legacy host; the legacy host is an IPv6 host, and the new host supports a protocol for separating a host ID from a host locator. As shown in FIG. 1, the method includes the following steps:
101: Receive a first packet sent by the source host in a network that covers the source host, where the first packet carries an address identifier of the source host.
102: Convert the first packet into a second packet compatible with the destination host, where the second packet carries an address identifier of the destination host.
103: Send the second packet to the destination host in a network that covers the destination host.

For example, after sending the second packet to the destination host in the network that covers the destination host, the method further includes the following step:
The destination host sends a response packet to the source host.

For example, when the source host is a legacy host and the destination host is a new host, the method includes:
receiving a legacy packet sent by the legacy host in the network that covers the legacy host, where the legacy packet carries an IPv6 address of the legacy host and a host ID of the new host;
obtaining the host ID of the legacy host, the locator of the legacy host, and the locator of the new host according to the IPv6 address of the legacy host and the host ID of the new host;
converting the legacy packet into a new packet that carries the host ID of the legacy host, the locator of the legacy host, the host ID of the new host, and the locator of the new host; and
sending the new packet to the new host in the network that covers the new host.

The step of obtaining the host ID of the legacy host, the locator of the legacy host, and the locator of the new host according to the IPv6 address of the legacy host and the host ID of the new host includes:
searching an ID-Locator Mapping (ILM) server for the locator of the new host corresponding to the host ID of the new host;
allocating a temporary host ID to the legacy host as a host ID of the legacy host;
and after the allocating the temporary host ID to the legacy host, further includes:
   buffering a mapping relationship between the IPv6 address of the legacy host and the temporary host ID of the legacy host into a local ILM table; and
   using a locator routable in the network that covers the new host as a locator of the legacy host.

The step of converting the legacy packet into the new packet that carries the host ID of the legacy host, the locator of the legacy host, the host ID of the new host, and the locator of the new host includes:
converting the format of the legacy packet into the format of the new packet compatible with the network that covers the new host, where the source host ID of the new packet is the host ID of the legacy host, the destination host ID is the host ID of the new host, the locator of the source host is the locator of the legacy host, and the locator of the destination host is the locator of the new host.

In another example, when the source host is a new host and the destination host is a legacy host, the method includes:
receiving a new packet sent by the new host in the network that covers the new host, where the new packet carries the host ID of the legacy host, the locator of the legacy host, the locator of the new host, and the host ID of the new host;
obtaining the IPv6 address of the legacy host according to the host ID of the legacy host;
converting the new packet into a legacy packet that carries the IPv6 address of the legacy host and the host ID of the new host; and
sending the legacy packet to the legacy host in the network that covers the legacy host.

The step of obtaining the IPv6 address of the legacy host according to the host ID of the legacy host includes:
searching a local ILM table for the IPv6 address of the legacy host according to the host ID of the legacy host.

The step of obtaining the IPv6 address of the legacy host according to the host ID of the legacy host further includes:
buffering a mapping relationship between the host ID of the new host and the locator of the new host into the local ILM table.

The step of converting the new packet into the legacy packet includes:
converting the format of the new packet into the format of the legacy packet in the network that covers the legacy host, where the source address of the legacy packet is the host ID of the new host, and the destination address is the IPv6 address of the legacy host.

Before receiving the new packet sent by the new host in the network that covers the new host, the method further includes:
allocating a fixed host ID to the legacy host as a host ID of the legacy host, and registering the mapping relationship between the host name of the legacy host and the host ID of the legacy host with a Domain Name System (DNS) server;
using a locator routable in the network that covers the new host as a locator of the legacy host, and registering the mapping relationship between the host ID of the legacy host and the locator of the legacy host with an ILM server; and
storing the mapping relationship between the host ID of the legacy host and the IPv6 address of the legacy host in the local ILM table.

In the method disclosed in this embodiment of the present invention, the packet sent by the source host is converted into a packet compatible with the destination host, which enables data communication between the legacy host and the new host, improves system scalability, and provides better mobility support.

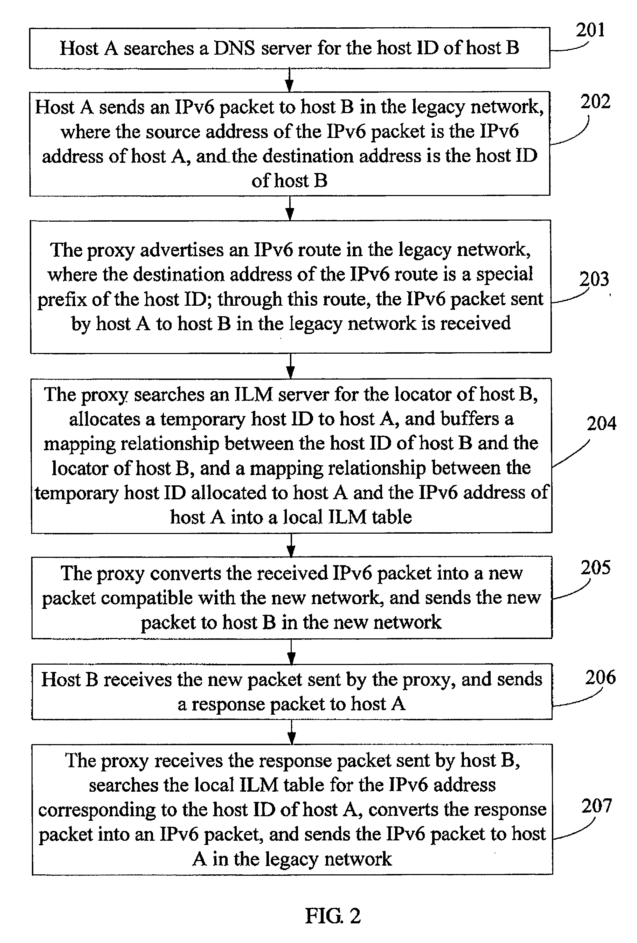

To implement communication between a legacy host and a new host in a new network architecture that separates an ID from a locator, another embodiment of the present invention provides a host communication method. This method uses a proxy mechanism to implement communication between a new HIP or HRA host and a legacy IPv6 host (IPv6 is designed by the Internet Engineering Task Force (IETF) for replacing IPv4). In this embodiment, a legacy host A initiates communication to a destination host B that is a new host, where the new host separates the ID from the locator, and the legacy host does not separate the ID from the locator. As shown in FIG 2, the method includes the following steps:
201: Host A searches a DNS server for the host ID of host B.

In this embodiment of the present invention, the DNS server maintains a mapping relationship between a Fully-Qualified Domain Name (FQDN) and a host ID. Because the length of a host ID is 128 bits that are equal to the length of an IPv6 address, the AAAA record in the DNS server may record the information about the host ID directly, without requiring any modification of the existing DNS. The mapping relationship between the host ID and the IPv6 address (also known as a locator in a new network) of the host is maintained by an ILM server.

In this step, the DNS server maintains the mapping relationship between the FQDN and the host ID, and the source host A is a legacy host. According to the FQDN, the host ID of the destination host B is found in the AAAA record in the DNS server and returned by the DNS server, and the source host A regards the returned host ID of the destination host B as the IPv6 address of host B.

202: Host A sends an IPv6 packet to host B in the legacy network, where the source address of the IPv6 packet is the IPv6 address of host A and the destination address is the host ID of host B.

203: The proxy advertises an IPv6 route in the legacy network, where the destination address of the IPv6 route is a special prefix of the host ID. Through this route, the IPv6 packet sent by host A to host B in the legacy network is received.

The proxy may be an existing proxy server, or a dedicated server, which is not limited in this embodiment. The proxy in this embodiment converts the packet to implement communication between the legacy host and the new host.

Because the proxy advertises an IPv6 route in the legacy network, where the destination address of the IPv6 route is a special prefix of the host ID, the packet is forwarded to the proxy hop by hop along the route advertised by the proxy.

204: After receiving the IPv6 packet, the proxy searches the ILM server for the locator corresponding to the host ID of host B, allocates a temporary host ID to host A, and buffers the mapping relationship between the host ID of host B and the locator of host B and the mapping relationship between the temporary host ID allocated to host A and the IPv6 address of host A into a local ILM table.

The local ILM table exists in the proxy and stores the locator (namely, the IPv6 address of the new host) corresponding to the host ID in a recent communication period. In this way, when the two hosts communicate repeatedly in a short time, the locator corresponding to the host ID can be obtained directly, and therefore it is not necessary to search the ILM server for the locator. The ILM table is updated at intervals. The updating interval can be set as required, and is not limited in this embodiment.

After receiving the IPv6 packet, the proxy searches the local ILM table for the locator (namely, the IPv6 address of host B) corresponding to the host ID of host B. If the locator is found in the local ILM table, the proxy directly obtains the locator corresponding to the host ID of host B; otherwise, the proxy searches the ILM server. After obtaining the mapping relationship between the host ID of host B and the locator from the ILM server, the proxy buffers the mapping relationship into the local ILM table. In this way, when host A or another host communicates with host B in a short time, the locator of host B can be obtained directly from the local ILM table, and therefore it is not necessary to search the ILM server for the locator.

The proxy allocates a temporary host ID to host A, and buffers the mapping relationship between the temporary host ID of host A and the IPv6 address of host A into the local ILM table. In this way, when host B or another new host communicates with host A in a short time, the proxy can directly obtain the temporary ID of host A and the corresponding IPv6 address from the local ILM table, and therefore it is not necessary to allocate a temporary ID to host A again.

205: The proxy converts the received IPv6 packet into a new packet compatible with the new network, and sends the new packet to host B in the new network.

The proxy converts format of the IPv6 packet received in the legacy network into a format of the new packet in the new network. The source- ID of this packet is the temporary host ID of host A, the destination-ID is the host ID of host B, the source-locator is a routable IPv6 address of the proxy in the new network, and the destination-locator is the IPv6 address of host B.

After converting the format of the IPv6 packet into the format of the new packet in the new network, the proxy sends the new packet to host B in the new network.

206: Host B receives the new packet sent by the proxy, and sends a response packet to host A.

After receiving the new packet sent by the proxy, host B sends a response packet to host A. The source-ID of the response packet is the host ID of host B, the destination-ID is the temporary host ID of host A, the source-locator is the IPv6 address of host B, and the destination-locator is a routable IPv6 address of the proxy in the new network.

207: The proxy receives the response packet sent by host B in the new network, searches the local ILM table for the IPv6 address corresponding to the host ID of the destination host A, converts the response packet into an IPv6 packet, and sends the IPv6 packet to host A in the legacy network.

After receiving the response packet sent by host B, the proxy searches the local ILM table for the IPv6 address corresponding to the host ID of the destination host A (namely, the temporary host ID allocated by the proxy to host A in step 204), and then converts the packet into an IPv6 packet. The destination address of this packet is the IPv6 address of host A, and the source address is the host ID of host B.

After converting the response packet into the IPv6 packet, the proxy sends the IPv6 packet to host A in the legacy network.

Through the preceding steps, when the legacy host A initiates communication to the new host B, the proxy converts the packet to implement data communication between host A and host B.

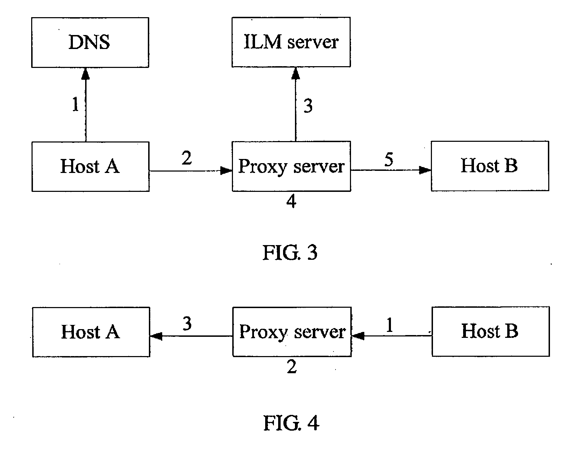

Another embodiment of the present invention provides a method for implementing communication between a legacy host A and a new host B. As shown in FIG. 3, when the legacy host A needs to access the new host B, the process is as follows:
1. Host A searches a DNS server for the IPv6 address corresponding to the FQDN of the destination host B. The DNS server returns a DNS response message. In the DNS response message, the host ID of host B is specified in the AAAA record. Because host A is a legacy host, host A regards the 128-bit value in the AAAA record as the IPv6 address of host B. Host A sends an IPv6 packet to host B. The source address of this packet is the IPv6 address of host A, and the destination address is the host ID of host B.
2. A proxy advertises an IPv6 route in a legacy network, where the destination address of the IPv6 route is a special prefix of the host ID. The packet is forwarded to the proxy hop by hop along the route advertised by the proxy.
3. After receiving the packet, the proxy searches a local ILM table for the locator corresponding to the host ID of host B (namely, the IPv6 address of host B). If no such locator is found in the local ILM table, the proxy searches an ILM server. After obtaining a mapping relationship between the host ID of host B and the locator from the ILM server, the proxy buffers the mapping relationship into the local ILM table.
4. The proxy allocates a temporary host ID to host A, and buffers the mapping relationship between the temporary ID of host A and the IPv6 address of host A into the local ILM table.
5. The proxy converts the format of the IPv6 packet into a packet protocol format compatible with the new network. The source-ID of this packet is a temporary host ID of host A, the destination-ID is the host ID of host B, the source-locator is a routable IPv6 address of the proxy in the new network, and the destination-locator is an IPv6 address of host B.

As shown in FIG. 4, after host B receives the packet sent by the proxy, the detailed steps are as follows:
1. Host B sends a response packet. The source-ID of the response packet is the host ID of host B, the destination-ID is a temporary host ID of host A, the source-locator is an IPv6 address of host B, and the destination-locator is a routable IPv6 address of the proxy in the new network.
2. After receiving the response packet, the proxy searches the local ILM table for the IPv6 address corresponding to the destination host ID (namely, the temporary host ID of host A), and then converts the packet into an IPv6 packet. The destination address of this packet is the IPv6 address of host A, and the source address is the host ID of host B.
3. The proxy sends the converted IPv6 packet to host A. The destination address of this packet is the IPv6 address of host A, and the source address is the host ID of host B.

In the method provided in this embodiment, the proxy converts the IPv6 packet sent by the legacy host A into a packet compatible with the new network that covers the destination host B, which enables data communication between the legacy host A and the new host B, improves system scalability, and provides better mobility support.

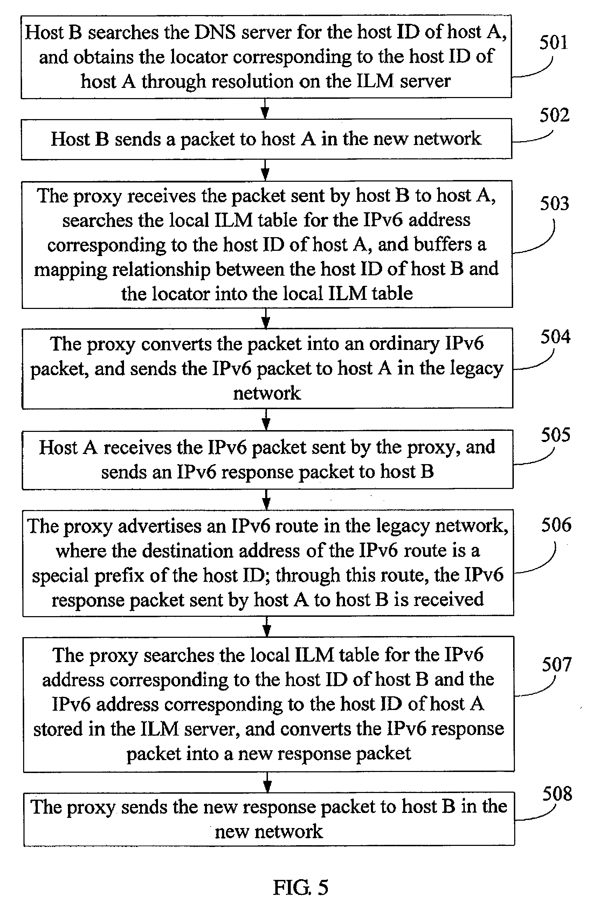

To implement communication between a legacy host and a new host in a new network architecture that separates an ID from a locator, an embodiment of the present invention provides a host communication method. This method uses a proxy mechanism to implement communication between a new HIP or HRA host and a legacy IPv6 host. In the previous embodiment, a legacy host A initiates communication to a new host B; in this embodiment, the new host B initiates communication to the legacy host A, where the new host separates the ID from the locator, and the legacy host is an IPv6 host that does not separate the ID from the locator. As shown in FIG. 5, the implementation process is as follows:
501: Host B searches a DNS server for the host ID of host A, and obtains the locator corresponding to the host ID of host A through resolution on an ILM server.

If the legacy host A expects to be accessed by the new host B, the proxy needs to allocate a fixed host ID to the legacy host A and register the host ID into the AAAA record corresponding to the FQDN of host A in the DNS server. Meanwhile, the proxy registers a mapping relationship between the host ID of host A and a routable IPv6 address of the proxy in the new network with the ILM server. Besides, a local ILM table stores the mapping relationship between the host ID of host A and the IPv6 address of host A.

Before initiating a connection to host A, host B obtains the host ID corresponding to the FQDN of host A (namely, the fixed host ID allocated by the proxy to host A) through resolution on the DNS server, and then obtains the locator (namely, a routable IPv6 address of the proxy in the new network, which has been registered with the ILM server) corresponding to the host ID of host A through resolution on the ILM server:
502: Host B sends a packet to host A in the new network.

Host B sends a packet to host A in the new network according to the format of a new packet. The source-ID of this packet is the host ID of host B, the destination-ID is the fixed host ID allocated by the proxy to host A and stored in the DNS server, the source-locator is the IPv6 address of host B, and the destination-locator is the locator of host A (namely, a routable IPv6 address of the proxy in the new network), which is stored in the ILM server.

503: The proxy receives the packet sent by host B to host A in the new network, searches the local ILM table for the IPv6 address corresponding to the host ID of host A, and buffers the mapping relationship between the host ID of host B and the locator into the local ILM table.

The proxy may be an existing proxy server, or a dedicated server, which is not limited in this embodiment. The proxy in this embodiment converts the packet to implement communication between the legacy host and the new host.

Because the destination-locator of the packet is a routable IPv6 address of the proxy in the new network, the packet sent by host B to host A is forwarded to the proxy hop by hop.

After the proxy receives the packet sent by host B to host A, the proxy searches the local ILM table for the IPv6 address corresponding to the host ID of host A. The IPv6 address is the IPv6 address of host A, and is pre-stored in the local ILM table. The proxy obtains the mapping relationship between the host ID of host B and the locator from the packet and buffers the mapping relationship into the local ILM table.

504: The proxy converts the packet into an ordinary IPv6 packet, and sends the IPv6 packet to host A in the legacy network.

The proxy converts the protocol format of the packet so that the packet is converted into an ordinary IPv6 packet. The source address of the IPv6 packet is the host ID of host B, and the destination address is the IPv6 address of host A.

505: Host A receives the IPv6 packet sent by the proxy, and sends an IPv6 response packet to host B.

After receiving the IPv6 packet sent by the proxy, host A sends an IPv6 response packet to host B. The source address of the IPv6 response packet is the IPv6 address of host A, and the destination address is the host ID of host B.

506: The proxy advertises an IPv6 route in the legacy network, where the destination address of the IPv6 route is a special prefix of the host ID. Through this route, the IPv6 response packet sent by host A to host B is received.

The proxy advertises the IPv6 route in the legacy network, where the destination address of the IPv6 route is the special prefix of the host ID. The IPv6 response packet sent by host A to host B is forwarded to the proxy hop by hop along the route advertised by the proxy.

507: After receiving the IPv6 response packet, the proxy searches the local ILM table for the IPv6 address corresponding to the host ID of host B and the host ID corresponding to the IPv6 address of host A stored in the ILM server, and converts the IPv6 response packet into a new response packet.

After receiving the IPv6 response packet, the proxy searches the local ILM table for the IPv6 address corresponding to the host ID of host B that is stored in step 503, and searches the ILM server for the pre-stored locator of host A (namely, a routable IPv6 address of the proxy in the new network).

Afterward, the proxy converts the protocol format of the IPv6 response packet so that the IPv6 response packet is converted into a packet compatible with the new network. The source-ID of the new response packet is the host ID of host A, the destination-ID is the host ID of host B, the source-locator is a routable IPv6 address of the proxy in the new network, and the destination-locator is the IPv6 address of host B.

508: The proxy sends the new response packet to host B in the new network.

Through the preceding steps, when the new host B initiates communication to the legacy host A, the proxy converts the packet to implement data communication between host A and host B.

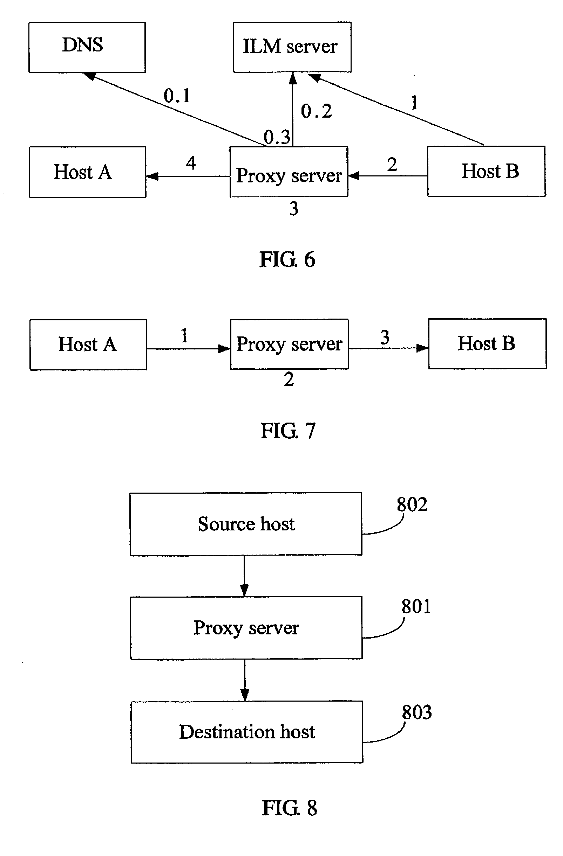

Another embodiment of the present invention provides a method for implementing communication between a new host B and a legacy host A. As shown in FIG. 6, when the new host B needs to access the legacy host A, the process is as follows:
1. Before initiating a connection to host A, host B obtains the host ID corresponding to the FQDN of host A through resolution on a DNS server, and then obtains the locator (namely, a routable IPv6 address of a proxy in a new network) corresponding to the host ID of host A through resolution on an ILM server.
   Before the foregoing step occurs, the process further includes:
   0.1. The proxy allocates a fixed host ID to host A as a value of the AAAA record of host A in the DNS server.
   0.2. A mapping relationship between the host ID that is allocated by the proxy to host A and a routable locator of the proxy in the new network is registered with the ILM server.
   0.3. The proxy stores the mapping relationship between the host ID of host A and the IPv4 address of host A into a local ILM table.
2. Host B sends a packet to host A. The source-ID of this packet is the host ID of host B, the destination-ID is the host ID allocated by the proxy to host A, the source-locator is the IPv6 address of host B, and the destination-locator is the locator of host A which is stored in the ILM server (namely, a routable IPv6 address of the proxy in the new network). Because the destination-locator is a routable IPv6 address of the proxy in the new network, the packet is forwarded to the proxy hop by hop.
3. After receiving the packet, the proxy searches the local ILM table for the IPv6 address corresponding to the host ID of host A. Meanwhile, the proxy buffers the mapping relationship between the host ID of host B and the locator into the local ILM table.
4. The proxy converts the protocol format of the packet so that the packet is converted into an ordinary IPv6 packet. The source address of the IPv6 packet is the host ID of host B, and the destination address is the IPv6 address of host A. The proxy sends the IPv6 packet to host A.

As shown in FIG. 7, after host A receives the IPv6 packet sent by the proxy, the detailed steps are as follows:
1. Host A sends an IPv6 response packet to host B. The source address of this response packet is the IPv6 address of host A, and the destination address is the host ID of host B.
2. After receiving the IPv6 response packet, the proxy searches the local ILM table for the IPv6 address corresponding to the host ID of host B.
   The proxy advertises an IPv6 route in the legacy network, where the destination address of the IPv6 route is a special prefix of the host ID. The IPv6 response packet is forwarded to the proxy hop by hop along the route advertised by the proxy.
3. The proxy converts the protocol format of the IPv6 response packet so that the IPv6 response packet is converted into a response packet compatible with the new network, and sends the response packet to host B. The source-ID of the response packet is the host ID of host A, the destination-ID is the host ID of host B, the source-locator is a routable IPv6 address of the proxy in the new network, and the destination-locator is the IPv6 address of host B.

In the method provided in this embodiment, the proxy converts the IPv6 packet sent by the new host B into an IPv6 packet compatible with the legacy network that covers the legacy host A, which enables data communication between the legacy host A and the new host B, improves system scalability, and provides better mobility support.

As shown in FIG 8, an embodiment of the present invention provides a system for communication between a source host 802 and a destination host 803. In this embodiment, when the source host 802 is a legacy host, the destination host 803 is a new host; when the source host 802 is a new host, the destination host 803 is a legacy host. The legacy host is an IPv6 host, and the new host supports a protocol for separating a host ID from a host locator. The system includes a proxy server 801, the source host 802 and the destination host 803, in which:
the proxy server 801, configured to receive a first packet sent by the source host 802 in a network that covers the source host 802, where the first packet carries an address identifier of the source host 802; convert the first packet into a second packet compatible with the destination host 803, where the second packet carries an address identifier of the destination host 803; and send the second packet to the destination host 803 in a network that covers the destination host 803;
the source host 802, configured to send the first packet; and
the destination host 803, configured to receive the second packet.

For example, when the source host 802 is a legacy host and the destination host 803 is a new host,
the proxy server 801 is configured to: receive a legacy packet sent by the legacy host in the network that covers the legacy host, where the legacy packet carries the IPv6 address of the legacy host and the host ID of the new host; obtain the host ID of the legacy host, the locator of the legacy host, and the locator of the new host according to the IPv6 address of the legacy host and the host ID of the new host; convert the legacy packet into a new packet compatible with the new host, where the new packet carries the host ID of the legacy host, the locator of the legacy host, the host ID of the new host, and the locator of the new host; and send the new packet to the new host in the network that covers the new host.

In another example, when the source host 802 is a new host and the destination host 803 is a legacy host,
the proxy server 801 is configured to: receive a new packet sent by the new host in the network that covers the new host, where the new packet carries the host ID of the legacy host, the locator of the legacy host, the host ID of the new host, and the locator of the new host; obtain the IPv6 address of the legacy host according to the host ID of the legacy host; convert the new packet into a legacy packet that carries the IPv6 address of the legacy host and the host ID of the new host; and send the legacy packet to the legacy host in the network that covers the legacy host.

In the system provided in this embodiment, the proxy server converts the packet sent by the source host into a packet compatible with the destination host, which enables data communication between the legacy host and the new host, improves system scalability, and provides better mobility support.

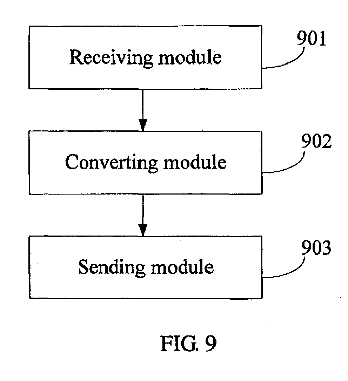

An embodiment of the present invention provides a proxy server to implement communication between a legacy host and a new host. In this embodiment, when the source host is a legacy host, the destination host is a new host; when the source host is a new host, the destination host is a legacy host. As shown in FIG. 9, the proxy server may include:
a receiving module 901, configured to receive a first packet sent by the source host in a network that covers the source host, where the first packet carries an address identifier of the source host;
a converting module 902, configured to convert the first packet into a second packet compatible with the destination host, where the second packet carries an address identifier of the destination host; and
a sending module 903, configured to send the second packet to the destination host in a network that covers the destination host.

For example, when the source host is a legacy host and the destination host is a new host, the proxy server includes:
a first receiving module 901, configured to receive a legacy packet sent by the legacy host in a network that covers the legacy host, where the legacy packet carries an IPv6 address of the legacy host and a host ID of the new host;
a first obtaining module, configured to obtain the host ID of the legacy host, the locator of the legacy host, and the locator of the new host according to the IPv6 address of the legacy host and the host ID of the new host;
a first converting module 902, configured to convert the legacy packet into a new packet compatible with the new host, where the new packet carries the host ID of the legacy host, the locator of the legacy host, the host ID of the new host, and the locator of the new host; and
a first sending module 903, configured to send the new packet to the new host in a network that covers the new host.

The first obtaining module includes:
a first searching unit, configured to search an ILM server for the locator corresponding to the host ID of the new host;
a first allocating unit, configured to allocate a temporary host ID to the legacy host as the host ID of the legacy host; and
a first obtaining unit, configured to use a locator routable in the network that covers the new host as the locator of the legacy host.

The first converting module 902 includes:
a first converting unit, configured to: convert the format of the legacy packet into the format of the new packet compatible with the network that covers the new host, where the source host ID of the new packet is the host ID of the legacy host, the destination host ID is the host ID of the new host, the locator of the source host is the locator of the legacy host, and the locator of the destination host is the locator of the new host.

The first allocating unit further includes:
a first buffering subunit, configured to buffer a mapping relationship between the IPv6 address of the legacy host and the legacy host ID allocated by the first allocating unit into a local ILM table.

For example, when the source host is a new host and the destination host is a legacy host, the proxy server includes:
a second receiving module 901, configured to receive a new packet sent by the new host in a network that covers the new host, where the new packet carries the host ID of the legacy host, the locator of the legacy host, the host ID of the new host, and the locator of the new host;
a second obtaining module, configured to obtain the IPv4 address of the legacy host according to the host ID of the legacy host;
a second converting module 902, configured to convert the new packet into a legacy packet that carries the IPv6 address of the legacy host and the host ID of the new host; and
a second sending module 903, configured to send the legacy packet to the legacy host in a network that covers the legacy host.

The second obtaining module includes:
a second searching unit, configured to search a local ILM table for the IPv6 address of the legacy host according to the host ID of the legacy host.

The second converting module 902 includes:
a second converting unit, configured to convert the format of the new packet into the format of the legacy packet in the network that covers the legacy host, where the source address of the legacy packet is the host ID of the new host, and the destination address is the IPv6 address of the legacy host.

The second obtaining module further includes:
a second buffering unit, configured to buffer a mapping relationship between the host ID of the new host and the locator of the new host into the local ILM table.

The second receiving module 901 includes:
a second allocating unit, configured to allocate a fixed host ID to the legacy host as a host ID of the legacy host, and register a mapping relationship between the host name of the legacy host and the host ID of the legacy host with a DNS server;
a second obtaining unit, configured to: use a routable locator of the proxy server in the network that covers the new host as a locator of the legacy host, and register the mapping relationship between the host ID of the legacy host and the locator of the legacy host with the ILM server; and
a third buffering unit, configured to buffer the mapping relationship between the host ID of the legacy host and the IPv6 address of the legacy host into the local ILM table.

The sending module 903 includes:
a responding unit, configured to send a response packet from the destination host to the source host.

In the proxy server provided in this embodiment, the packet sent by the source host is converted into a packet compatible with the destination host, which enables data communication between the legacy host and the new host, improves system scalability, and provides better mobility support.

The embodiments of the present invention may be implemented through software, and the software may be stored in readable storage media such as a hard disk of a router, a cache, or a Compact Disk-Read Only Memory (CD-ROM).

The above descriptions are merely exemplary embodiments of the present invention, and are not intended to limit the scope of the present invention. Any modifications, equivalent replacements, or improvements that can be easily derived by those skilled in the art without departing from the scope of the invention also fall within the protection scope of the present invention.

## Claims

1. A host communication method, wherein a source host is a legacy host, a destination host is a new host; the legacy host is an Internet Protocol Version 6, IPv6, host, and the new host supports a protocol for separating a host identity, ID, from a host locator; and the method comprises:
receiving (101) a first packet sent by the source host in a network that covers the source host, wherein the first packet is a legacy packet that carries an IPv6 address of the source host and a host ID of the destination host;
obtaining (102) a host ID of the source host, a locator of the source host, and a locator of the destination host according to the IPv6 address of the source host and the host ID of the destination host, wherein the locator of the source host is a routable IPv6 address of a proxy, the proxy converting packets to implement communication between the legacy host and the new host;
converting (102) the legacy packet into a second packet that carries the host ID of the source host, the locator of the source host, the host ID of the destination host, and the locator of the destination host, the second packet being a new packet; and
sending (103) the second packet to the destination host in a network that covers the destination host.

2. The method according to claim 1, wherein the step of obtaining the host ID of the source host, the locator of the source host, and the locator of the destination host according to the IPv6 address of the source host and the host ID of the destination host comprises:
searching a local ID-Locator Mapping, ILM, table for a locator corresponding to the host ID of the destination host; if no such locator is found, searching an ILM server for the locator corresponding to the host ID of the destination host;
allocating a temporary host ID to the source host as the host ID of the source host, and buffering a mapping relationship between the IPv6 address of the source host and the temporary host ID into the local ILM table; and
using the routable IPv6 address of the proxy in the network that covers the destination host as the locator of the source host.

3. A host communication method, wherein a source host is a new host, a destination host is a legacy host; the legacy host is an Internet Protocol Version 6, IPv6, host, and the new host supports a protocol for separating a host identity, ID, from a host locator; and the method comprises:
receiving (101) a first packet sent by the source host in a network that covers the source host, wherein the first packet is a new packet that carries a host ID of the destination host, a locator of the destination host, a host ID of the source host, and a locator of the source host, wherein the locator of the destination host is a routable IPv6 address of a proxy, the proxy converting packets to implement communication between the legacy host and the new host;
obtaining (102) an IPv6 address of the destination host according to the host ID of the destination host; and
converting (102) the new packet into a second packet, wherein a destination address of the second packet is the IPv6 address of the destination host, and a source address of the second packet is the host ID of the source host, the second packet being a legacy packet; and
sending (103) the second packet to the destination host in a network that covers the destination host.

4. The host communication method according to claim 3, wherein the step of obtaining the IPv6 address of the destination host according to the host ID of the destination host comprises:
searching a local ID-Locator Mapping, ILM, table for the IPv6 address of the destination host according to the host ID of the destination host.

5. The method according to claim 3, further comprising:
buffering a mapping relationship between the host ID of the source host and the locator of the source host into the local ILM table.

6. The method according to claim 3, wherein before receiving the first packet sent by the source host in the network that covers the source host, the method further comprises:
allocating a fixed host ID to the destination host as the host ID of the destination host, and registering a mapping relationship between a host name of the destination host and the host ID of the destination host with a Domain Name System, DNS, server;
using the routable IPv6 address of the proxy in the network that covers the source host as the locator of the destination host, and registering a mapping relationship between the host ID of the destination host and the locator of the destination host in an ILM server; and
storing a mapping relationship between the host ID of the destination host and the IPv6 address of the destination host in a local ILM table.

7. A host communication system, wherein a source host (802) is a legacy host, a destination host (803) is a new host; the legacy host is an Internet Protocol Version 6, IPv6, host, and the new host supports a protocol for separating a host identity, ID, from a host locator; and the system comprises:
the source host (802), configured to send a first packet, the first packet being a legacy packet, wherein a source address of the legacy packet is an IPv6 address of the source host (802) and a destination address is a host ID of the destination host (803);
a proxy server (801), configured to receive (101) the first packet in a network that covers the source host (802), obtain (102) a host ID of the source host (802), a locator of the source host (802), and a locator of the destination host (803) according to the IPv6 address of the source host (802) and the host ID of the destination host (803), wherein the locator of the source host is a routable IPv6 address of the proxy server, the proxy server converting packets to implement communication between the legacy host and the new host; convert (102) the first packet into a second packet compatible with the destination host (803), wherein the second packet is a new packet that carries the host ID of the source host (802), the locator of the source host (802), the host ID of the destination host (803), and the locator of the destination host (803); and send (103) the second packet to the destination host (803) in a network that covers the destination host (803); and
the destination host (803), configured to receive the second packet.

8. A host communication system, wherein a source host (802) is a new host and a destination host (803) is a legacy host, the legacy host is an Internet Protocol Version 6, IPv6, host, and the new host supports a protocol for separating a host identity, ID, from a host locator; and the system comprises:
the source host (802), configured to send a first packet, the first packet being a new packet that carries a host ID of the destination host (803), a locator of the destination host (803), a host ID of the source host (802), and a locator of the source host (802), wherein the locator of the destination host is a routable IPv6 address of a proxy server (801), the proxy server (801) converting packets to implement communication between the legacy host and the new host; and
the proxy server (801) is configured to receive the new packet; obtain an IPv6 address of the destination host (803) according to the host ID of the destination host (803); convert the new packet into a second packet, the second packet being a legacy packet, wherein a destination address of the legacy packet is the IPv6 address of the destination host (803), and a source address is the host ID of the source host (802); and send the legacy packet to the destination host (803) in a network that covers the destination host (803).

9. A proxy server, comprising:
a receiving module (901), configured to receive a first packet sent by a source host in a network that covers the source host, wherein the first packet is a legacy packet that carries an IPv6 address of the source host and a host ID of a destination host when the source host is a legacy host, the destination host is a new host; the legacy host is an Internet Protocol version 6, IPv6, host, and the new host supports a protocol for separating a host identity, ID, from a host locator;
an obtaining module, configured to obtain a host ID of the source host, a locator of the source host, and a locator of the destination host according to the IPv6 address of the source host and the host ID of the destination host, wherein the locator of the source host is a routable IPv6 address of the proxy server, the proxy server converting packets to implement communication between the legacy host and the new host;
a converting module (902), configured to convert the first packet into a second packet compatible with the destination host, wherein the second packet is a new packet that carries the host ID of the source host, the locator of the source host, the host ID of the destination host, and the locator of the destination host; and
a sending module (903), configured to send the second packet to the destination host in a network that covers the destination host.

10. The proxy server according to claim 9, wherein the obtaining module comprises:
a first searching unit, configured to search a local ID-Locator Mapping, ILM, table for a locator corresponding to the host ID of the destination host; if no such locator is found, search an ILM server for the locator corresponding to the host ID of the destination host;
a first allocating unit, configured to allocate a temporary host ID to the source host as the host ID of the source host; and
a first obtaining unit, configured to use the routable IPv6 address of the proxy server in the network that covers the destination host as the locator of the source host;
wherein the first allocating unit comprises:
a first buffering subunit, configured to buffer a mapping relationship between an IPv6 address of the source host and the source host ID allocated by the first allocating unit into the local ILM table.

11. The proxy server according to claim 9, wherein the sending module (903) comprises:
a responding unit, configured to send a response packet from the destination host to the source host.

12. A proxy server comprising:
a receiving module (901), configured to receive a first packet sent by a source host in a network that covers the source host, wherein the first packet is a new packet that carries a host ID of the destination host, a locator of the destination host, a host ID of the source host, and a locator of the source host when the source host is a new host and the destination host is a legacy host, wherein the locator of the destination host is a routable IPv6 address of the proxy server, the proxy server converting packets to implement communication between the legacy host and the new host;
an obtaining module, configured to obtain an IPv6 address of the destination host according to the host ID of the destination host;
a second converting module, configured to convert the new packet into a second packet, the second packet being a legacy packet that carries the IPv6 address of the destination host and the host ID of the source host; and
a sending module, configured to send the legacy packet to the destination host in a network that covers the destination host.

13. The proxy server according to claim 12, wherein the obtaining module comprises:
a second searching unit, configured to search a local ID-Locator Mapping, ILM, table for the IPv6 address of the destination host according to the host ID of the destination host; and
a second buffering unit, configured to buffer a mapping relationship between the host ID of the source host and the locator of the source host into the local ILM table.

14. The proxy server according to claim 12, wherein the receiving module comprises:
a second allocating unit, configured to allocate a fixed host ID to the destination host as the host ID of the destination host, and register a mapping relationship between a host name of the destination host and the host ID of the destination host with a Domain Name System, DNS, server;
a second obtaining unit, configured to use the routable IPv6 address of the proxy server in the network that covers the source host as the locator of the destination host, and register a mapping relationship between the host ID of the destination host and the locator of the destination host with an ID-Locator Mapping, ILM, server; and
a third buffering unit, configured to buffer a mapping relationship between the host ID of the destination host and the IPv6 address of the destination host into a local ILM table.

## Patentansprüche

1. Host-Kommunikationsverfahren, wobei ein Quellenhost ein veralteter Host ist, ein Zielhost ein neuer Host ist; der veraltete Host ein Host mit Internet-Protokoll Version 6 IPv6 ist und der neue Host ein Protokoll zum Trennen einer Host-Identität ID von einem Hostlokalisierer unterstützt; und das Verfahren Folgendes umfasst:
Empfangen (101) eines ersten Pakets, das durch den Quellenhost in einem Netzwerk gesendet wird, das den Quellenhost abdeckt, wobei das erste Paket ein veraltetes Paket ist, das eine IPv6-Adresse des Quellenhosts und eine Host-ID des Zielhosts führt;
Erhalten (102) einer Host-ID des Quellenhosts, eines Lokalisierers des Quellenhosts und eines Lokalisierers des Zielhosts gemäß der IPv6-Adresse des Quellenhosts und der Host-ID des Zielhosts, wobei der Lokalisierer des Quellenhosts eine routbare IPv6-Adresse eines Proxy ist, wobei der Proxy Pakete umsetzt, um Kommunikation zwischen dem veralteten Host und dem neuen Host zu implementieren;
Umsetzten (102) des veralteten Pakets in ein zweites Paket, das die Host-ID des Quellenhosts, den Lokalisierer des Quellenhosts, die Host-ID des Zielhosts und den Lokalisierer des Zielhosts führt, wobei das zweite Paket ein neues Paket ist; und
Senden (103) des zweiten Pakets zu dem Zielhost in einem Netzwerk, das den Zielhost abdeckt.

2. Verfahren nach Anspruch 1, wobei der Schritt des Erhaltens der Host-ID des Quellenhosts, des Lokalisierers des Quellenhosts und des Lokalisierers des Zielhosts gemäß der IPv6-Adresse des Quellenhosts und der Host-ID des Zielhosts Folgendes umfasst:
Durchsuchen einer lokalen ID-Lokalisiererabbildungs- bzw. ILM-Tabelle nach einem der Host-ID des Zielhosts entsprechenden Lokalisierers; wenn kein solcher Lokalisierer gefunden wird, Durchsuchen eines ILM-Servers nach dem der Host-ID des Zielhosts entsprechenden Lokalisierers;
Vergeben einer temporären Host-ID an den Quellenhost als die Host-ID des Quellenhosts und Puffern einer Abbildungsbeziehung zwischen der IPv6-Adresse des Quellenhosts und der temporären Host-ID in die lokale ILM-Tabelle; und
Verwenden der routbaren IPv6-Adresse des Proxy in dem Netzwerk, das den Zielhost abdeckt, als den Lokalisierer des Quellenhosts.

3. Host-Kommunikationsverfahren, wobei ein Quellenhost ein neuer Host ist, ein Zielhost ein veralteter Host ist; der veraltete Host ein Host mit Internet-Protokoll Version 6 IPv6 ist und der neue Host ein Protokoll zum Trennen einer Host-Identität ID von einem Host-Lokalisierer unterstützt; und das Verfahren Folgendes umfasst:
Empfangen (101) eines ersten Pakets, das durch den Quellenhost in einem Netzwerk gesendet wird, das den Quellenhost abdeckt, wobei das erste Paket ein neues Paket ist, das eine Host-ID des Zielhosts, einen Lokalisierer des Zielhosts, eine Host-ID des Quellenhosts und einen Lokalisierer des Quellenhosts führt, wobei der Lokalisierer des Zielhosts eine routbare IPv6-Adresse eines Proxy ist, wobei der Proxy Pakete umsetzt, um Kommunikation zwischen dem veralteten Host und dem neuen Host zu implementieren; Erhalten (102) einer IPv6-Adresse des Zielhosts gemäß der Host-ID des Zielhosts; und
Umsetzten (102) des neuen Pakets in ein zweites Paket, wobei eine Zieladresse des zweiten Pakets die IPv6-Adresse des Zielhosts ist und eine Quellenadresse des zweiten Paketes die Host-ID des Quellenhosts ist, wobei das zweite Paket ein veraltetes Paket ist; und
Senden (103) des zweiten Pakets zu dem Zielhost in einem Netzwerk, das den Zielhost abdeckt.

4. Host-Kommunikationsverfahren nach Anspruch 3, wobei der Schritt des Erhaltens der IPv6-Adresse des Zielhosts gemäß der Host-ID des Zielhosts Folgendes umfasst:
Durchsuchen einer lokalen ID-Lokalisiererabbildungs- bzw. ILM-Tabelle nach der IPv6-Adresse des Zielhosts gemäß der Host-ID des Zielhosts.

5. Verfahren nach Anspruch 3, ferner umfassend:
Puffern einer Abbildungsbeziehung zwischen der Host-ID des Quellenhosts und dem Lokalisierer des Quellenhosts in die lokale ILM-Tabelle.

6. Verfahren nach Anspruch 3, wobei das Verfahren vor dem Empfangen des ersten Paketes, das durch den Quellenhost in dem Netzwerk gesendet wird, das den Quellenhost abdeckt, ferner Folgendes umfasst:
Vergeben einer festen Host-ID an den Zielhost als die Host-ID des Zielhosts und Registrieren einer Abbildungsbeziehung zwischen einem Hostnamen des Zielhosts und der Host-ID des Zielhosts bei einem Domänennamensystem- bzw. DNS-Server;
Verwenden der routbaren IPv6-Adresse des Proxy in dem Netzwerk, das den Quellenhost abdeckt, als den Lokalisierer des Zielhosts und Registrieren einer Abbildungsbeziehung zwischen der Host-ID des Zielhosts und dem Lokalisierer des Zielhosts in einem ILM-Server; und
Speichern einer Abbildungsbeziehung zwischen der Host-ID des Zielhosts und der IPv6-Adresse des Zielhosts in einer lokalen ILM-Tabelle.

7. Host-Kommunikationssystem, wobei ein Quellenhost (802) ein veralteter Host ist, ein Zielhost (803) ein neuer Host ist; der veraltete Host ein Host mit Internet-Protokoll Version 6 IPv6 ist und der neue Host ein Protokoll zum Trennen einer Host-Identität ID von einem Hostlokalisierer unterstützt; und das System Folgendes umfasst:
einen Quellenhost (802), ausgelegt zum Senden eines ersten Pakets, wobei das erste Paket ein veraltetes Paket ist, wobei eine Quellenadresse des veralteten Pakets eine IPv6-Adresse des Quellenhosts (802) ist und eine Zieladresse eine Host-ID des Zielhosts (803) ist;
einen Proxy-Server (801), ausgelegt zum Empfangen (101) des ersten Pakets in einem Netzwerk, das den Quellenhost (802) abdeckt, Erhalten (102) einer Host-ID des Quellenhosts (802), eines Lokalisierers des Quellenhosts (802) und eines Lokalisierers des Zielhosts (803) gemäß der IPv6-Adresse des Quellenhosts (802) und der Host-ID des Zielhosts (803), wobei der Lokalisierer des Quellenhosts eine routbare IPv6-Adresse des Proxy-Servers ist und der Proxy-Server Pakete umsetzt, um Kommunikation zwischen dem veralteten Host und dem neuen Host zu implementieren; Umsetzten (102) des ersten Pakets in ein zweites Paket, das mit dem Zielhost (803) kompatibel ist, wobei das zweite Paket ein neues Paket ist, das die Host-ID des Quellenhosts (802), den Lokalisierer des Quellenhosts (802), die Host-ID des Zielhosts (803) und den Lokalisierer des Zielhosts (803) führt; und Senden (103) des zweiten Pakets zu dem Zielhost (803) in einem Netzwerk, das den Zielhost (803) abdeckt; und
den Zielhost (803), ausgelegt zum Empfangen des zweiten Pakets.

8. Host-Kommunikationssystem, wobei ein Quellenhost (802) ein neuer Host ist und ein Zielhost (803) ein veralteter Host ist, wobei der veraltete Host ein Host mit Internet-Protokoll Version 6 IPv6 ist und der neue Host ein Protokoll zum Trennen einer Host-Identität ID von einem Hostlokalisierer unterstützt; und das System Folgendes umfasst:
den Quellenhost (802), ausgelegt zum Senden eines ersten Pakets, wobei das erste Paket ein neues Paket ist, das eine Host-ID des Zielhosts (803), einen Lokalisierer des Zielhosts (803), eine Host-ID des Quellenhosts (802) und einen Lokalisierer des Quellenhosts (802) führt, wobei der Lokalisierer des Zielhosts eine routbare IPv6-Adresse eines Proxy-Servers (801) ist, wobei der Proxy-Server (801) Pakete umsetzt, um Kommunikation zwischen dem veralteten Host und dem neuen Host zu implementieren; und
der Proxy-Server (801) ausgelegt ist zum Empfangen des neuen Pakets; Erhalten einer IPv6-Adresse des Zielhosts (803) gemäß der Host-ID des Zielhosts (803); Umsetzten des neuen Pakets in ein zweites Paket, wobei das zweite Paket ein veraltetes Paket ist, wobei eine Zieladresse des veralteten Pakets die IPv6-Adresse des Zielhosts (803) ist und eine Quellenadresse die Host-ID des Quellenhosts (802) ist; und Senden des veralteten Pakets zu dem Zielhost (803) in einem Netzwerk, das den Zielhost (803) abdeckt.

9. Proxy-Server, umfassend:
ein Empfangsmodul (901), ausgelegt zum Empfangen eines ersten Pakets, das durch einen Quellenhost in einem Netzwerk gesendet wird, das den Quellenhost abdeckt, wobei das erste Paket ein veraltetes Paket ist, das eine IPv6-Adresse des Quellenhosts und
eine Host-ID des Zielhosts führt, wenn der Quellenhost ein veralteter Host ist, der Zielhost ein neuer Host ist; der veraltete Host ein Host mit Internet-Protokollversion Version 6 IPv6 ist und der neue Host ein Protokoll zum Trennen einer Host-Identität ID von einem Hostlokalisierer unterstützt;
ein Erhaltemodul, ausgelegt zum Erhalten einer Host-ID des Quellenhosts, eines Lokalisierers des Quellenhosts und eines Lokalisierers des Zielhosts gemäß der IPv6-Adresse des Quellenhosts und der Host-ID des Zielhosts, wobei der Lokalisierer des Quellenhosts eine routbare IPv6-Adresse des Proxy-Servers ist und der Proxy-Server Pakete umsetzt, um Kommunikation zwischen dem veralteten Host und dem neuen Host zu implementieren;
ein Umsetzungsmodul (902), ausgelegt zum Umsetzen des ersten Pakets in ein zweites Paket, das mit dem Zielhost kompatibel ist, wobei das zweite Paket ein neues Paket ist, das die Host-ID des Quellenhosts, den Lokalisierer des Quellenhosts, die Host-ID des Zielhosts und den Lokalisierer des Zielhosts führt; und
ein Sendemodul (903), ausgelegt zum Senden des zweiten Pakets zu dem Zielhost in einem Netzwerk, das den Zielhost abdeckt.

10. Proxy-Server nach Anspruch 9, wobei das Erhaltemodul Folgendes umfasst:
eine erste Sucheinheit, ausgelegt zum Durchsuchen einer lokalen ID-Lokalisiererabbildungs- bzw. ILM-Tabelle nach einem der Host-ID des Zielhosts entsprechenden Lokalisierer; wenn kein solcher Lokalisierer gefunden wird, Durchsuchen eines ILM-Servers nach dem der Host-ID des Zielhosts entsprechenden Lokalisierer; eine erste Vergabeeinheit, ausgelegt zum Vergeben einer temporären Host-ID an den Quellenhost als die Host-ID des Quellenhosts; und
eine erste Erhalteeinheit, ausgelegt zum Verwenden der routbaren IPv6-Adresse des Proxy-Servers in dem Netzwerk, das den Zielhost abdeckt, als den Lokalisierer des Quellenhosts;
wobei die erste Vergabeeinheit Folgendes umfasst:
eine erste Pufferungs-Subeinheit, ausgelegt zum Puffern einer Abbildungsbeziehung zwischen einer IPv6-Adresse des Quellenhosts und der von der ersten Vergabeeinheit vergebenen Quellenhost-ID in die lokale ILM-Tabelle.

11. Proxy-Server nach Anspruch 9, wobei das Sendemodul (903) folgendes umfasst:
eine Antworteinheit, ausgelegt zum Senden eines Antwortpakets vom dem Zielhost zu dem Quellenhost.

12. Proxy-Server, umfassend:
ein Empfangsmodul (901), ausgelegt zum Empfangen eines ersten Pakets, das durch einen Quellenhost in einem Netzwerk gesendet wird, das den Quellenhost abdeckt, wobei das erste Paket ein neues Paket ist, das eine Host-ID des Zielhosts, einen Lokalisierer des Zielhosts, eine Host-ID des Quellenhosts und einen Lokalisierer des Quellenhosts führt, wenn der Quellenhost ein neuer Host ist und der Zielhost ein veralteter Host ist, wobei der Lokalisierer des Zielhosts eine routbare IPv6-Adresse des Proxy-Servers ist und der Proxy-Server Pakete umsetzt, um Kommunikation zwischen dem veralteten Host und dem neuen Host zu implementieren;
ein Erhaltemodul, ausgelegt zum Erhalten einer IPv6-Adresse des Zielhosts gemäß der Host-ID des Zielhosts ;
ein zweites Umsetzungsmodul, ausgelegt zum Umsetzen des neuen Pakets in ein zweites Paket, wobei das zweite Paket ein veraltetes Paket ist, das die IPv6-Adresse des Zielhosts und die Host-ID des Quellenhosts führt; und
ein Sendemodul, ausgelegt zum Senden des veralteten Pakets zu dem Zielhost in einem Netzwerk, das den Zielhost abdeckt.

13. Proxy-Server nach Anspruch 12, wobei das Erhaltemodul Folgendes umfasst:
eine zweite Sucheinheit, ausgelegt zum Durchsuchen einer lokalen ID-Lokalisiererabbildungs- bzw. ILM-Tabelle nach der IPv6-Adresse des Zielhosts gemäß der Host-ID des Zielhosts; und
eine zweite Pufferungseinheit, ausgelegt zum Puffern einer Abbildungsbeziehung zwischen der Host-ID des Quellenhosts und dem Lokalisierer des Quellenhosts in die lokale ILM-Tabelle.

14. Proxy-Server nach Anspruch 12, wobei das Empfangsmodul Folgendes umfasst:
eine zweite Vergabeeinheit, ausgelegt zum Vergeben einer festen Host-ID an den Zielhost als die Host-ID des Zielhosts und Registrieren einer Abbildungsbeziehung zwischen einem Host-Namen des Zielhosts und der Host-ID des Zielhosts bei einem Domänennamensystem- bzw. DNS-Server;
eine zweite Erhalteeinheit, ausgelegt zum Verwenden der routbaren IPv6-Adresse des Proxy-Servers in dem Netzwerk, das den Quellenhost abdeckt, als den Lokalisierer des Zielhosts und Registrieren einer Abbildungsbeziehung zwischen der Host-ID des Zielhosts und dem Lokalisierer des Zielhosts bei einem ID-Lokalisiererabbildungs- bzw. ILM-Server; und
eine dritte Pufferungseinheit, ausgelegt zum Puffern einer Abbildungsbeziehung zwischen der Host-ID des Zielhosts und der IPv6-Adresse des Zielhosts in eine lokale ILM-Tabelle.

## Revendications

1. Procédé de communication d'hôte, dans lequel un hôte source est un hôte patrimonial, un hôte de destination est un nouvel hôte ; l'hôte patrimonial est un hôte de protocole Internet version 6, IPv6, et le nouvel hôte supporte un protocole pour séparer une identité d'hôte, ID, d'un localisateur d'hôte ; et le procédé comprend les étapes suivantes :
recevoir (101) un premier paquet envoyé par l'hôte source dans un réseau qui couvre l'hôte source, où le premier paquet est un paquet patrimonial qui achemine une adresse IPv6 de l'hôte source et une ID d'hôte de l'hôte de destination ;
obtenir (102) une ID d'hôte de l'hôte source, un localisateur de l'hôte source, et un localisateur de l'hôte de destination conformément à l'adresse IPv6 de l'hôte source et à l'ID d'hôte de l'hôte de destination, où le localisateur de l'hôte source est une adresse IPv6 routable d'un serveur mandataire, le serveur mandataire convertissant des paquets pour implémenter une communication entre l'hôte patrimonial et le nouvel hôte ;
convertir (102) le paquet patrimonial en un second paquet qui achemine l'ID d'hôte de l'hôte source, le localisateur de l'hôte source, l'ID d'hôte de l'hôte de destination et le localisateur de l'hôte de destination, le second paquet étant un nouveau paquet ; et
envoyer (103) le second paquet à l'hôte de destination dans un réseau qui couvre l'hôte de destination.

2. Procédé selon la revendication 1, dans lequel l'étape comprenant d'obtenir l'ID d'hôte de l'hôte source, le localisateur de l'hôte source et le localisateur de l'hôte de destination selon l'adresse IPv6 de l'hôte source et l'ID d'hôte de l'hôte de destination comprend les étapes suivantes :
rechercher dans une table de mappage de localisateur d'ID, ILM, locale un localisateur correspondant à l'ID d'hôte de l'hôte de destination ; si aucun localisateur correspondant n'est trouvé, rechercher dans un serveur ILM le localisateur correspondant à l'ID d'hôte de l'hôte de destination ;
allouer une ID d'hôte temporaire à l'hôte source comme ID d'hôte de l'hôte source, et placer en mémoire tampon une relation de mappage entre l'adresse IPv6 de l'hôte source et l'ID d'hôte temporaire dans la table ILM locale ; et
utiliser l'adresse IPv6 routable du serveur mandataire dans le réseau qui couvre l'hôte de destination comme localisateur de l'hôte source.

3. Procédé de communication d'hôte, dans lequel un hôte source et un nouvel hôte, un hôte de destination est un hôte patrimonial ; l'hôte patrimonial est un hôte de protocole Internet version 6, IPv6, et le nouvel hôte supporte un protocole pour séparer une identité d'hôte, ID, d'un localisateur d'hôte ; et le procédé comprend les étapes suivantes :
recevoir (101) un premier paquet envoyé par l'hôte source dans un réseau qui couvre l'hôte source, où le premier paquet est un nouveau paquet qui achemine une ID d'hôte de l'hôte de destination, un localisateur de l'hôte de destination, une ID d'hôte de l'hôte source et un localisateur de l'hôte source, où le localisateur de l'hôte de destination est une adresse IPv6 routable d'un serveur mandataire, le serveur mandataire convertissant des paquets pour implémenter une communication entre l'hôte patrimonial et le nouvel hôte ;
obtenir (102) une adresse IPv6 de l'hôte de destination selon l'ID d'hôte de l'hôte de destination ; et
convertir (102) le nouveau paquet en un second paquet, où une adresse de destination du second paquet est l'adresse IPv6 de l'hôte de destination, et une adresse source du second paquet est l'ID d'hôte de l'hôte source, le second paquet étant un paquet patrimonial ; et
envoyer (103) le second paquet à l'hôte de destination dans un réseau qui couvre l'hôte de destination.

4. Procédé de communication d'hôte selon la revendication 3, dans lequel l'étape comprenant d'obtenir l'adresse IPv6 de l'hôte de destination selon l'ID d'hôte de l'hôte de destination comprend l'étape suivante :
rechercher dans une table de mappage de localisateur d'ID, ILM, locale l'adresse IPv6 de l'hôte de destination conformément à l'ID d'hôte de l'hôte de destination.

5. Procédé selon la revendication 3, comprenant en outre l'étape suivante :
placer en mémoire tampon une relation de mappage entre l'ID d'hôte de l'hôte source et le localisateur de l'hôte source dans la table ILM locale.

6. Procédé selon la revendication 3, dans lequel avant de recevoir le premier paquet envoyé par l'hôte source dans le réseau qui couvre l'hôte source, le procédé comprend en outre les étapes suivantes :
allouer une ID d'hôte fixe à l'hôte de destination comme ID d'hôte de l'hôte de destination, et enregistrer une relation de mappage entre un nom d'hôte de l'hôte de destination et l'ID d'hôte de l'hôte de destination avec un serveur de système de noms de domaine, DNS ; utiliser l'adresse IPv6 routable du serveur mandataire dans le réseau qui couvre l'hôte source comme localisateur de l'hôte de destination, et enregistrer une relation de mappage entre l'ID d'hôte de l'hôte de destination et le localisateur de l'hôte de destination dans un serveur ILM ; et mémoriser une relation de mappage entre l'ID d'hôte de l'hôte de destination et l'adresse IPv6 de l'hôte de destination dans une table ILM locale.

7. Système de communication d'hôte, dans lequel un hôte source (802) est un hôte patrimonial, un hôte de destination (803) est un nouvel hôte ; l'hôte patrimonial est un hôte de protocole Internet version 6, IPv6, et le nouvel hôte supporte un protocole pour séparer une identité d'hôte, ID, d'un localisateur d'hôte ; et le système comprend :
l'hôte source (802), configuré pour envoyer un premier paquet, le premier paquet étant un paquet patrimonial, où une adresse source du paquet patrimonial est une adresse IPv6 de l'hôte source (802) et une adresse de destination est une ID d'hôte de l'hôte de destination (803) ;
un serveur mandataire (801), configuré pour recevoir (101) le premier paquet dans un réseau qui couvre l'hôte source (802), obtenir (102) une ID d'hôte de l'hôte source (802), un localisateur de l'hôte source (802), et un localisateur de l'hôte de destination (803) conformément à l'adresse IPv6 de l'hôte source (802) et à l'ID d'hôte de l'hôte de destination (803), où le localisateur de l'hôte source est une adresse IPv6 routable du serveur mandataire, le serveur mandataire convertissant des paquets pour implémenter une communication entre l'hôte patrimonial et le nouvel hôte ; convertir (102) le premier paquet en un second paquet compatible avec l'hôte de destination (803), où le second paquet est un nouveau paquet qui achemine l'ID d'hôte de l'hôte source (802), le localisateur de l'hôte source (802), l'ID d'hôte de l'hôte de destination (803) et le localisateur de l'hôte de destination (803) ; et envoyer (103) le second paquet à l'hôte de destination (803) dans un réseau qui couvre l'hôte de destination (803) ; et
l'hôte de destination (803), configuré pour recevoir le second paquet.

8. Système de communication d'hôte, dans lequel un hôte source (802) est un nouvel hôte et un hôte de destination (803) est un hôte patrimonial, l'hôte patrimonial est un hôte de protocole Internet version 6, IPv6, et le nouvel hôte supporte un protocole pour séparer une identité d'hôte, ID, d'un localisateur d'hôte ; et le système comprend :
l'hôte source (802), configuré pour envoyer un premier paquet, le premier paquet étant un nouveau paquet qui achemine une ID d'hôte de l'hôte de destination (803), un localisateur de l'hôte de destination (803), une ID d'hôte de l'hôte source (802), et un localisateur de l'hôte source (802), où le localisateur de l'hôte de destination est une adresse IPv6 routable d'un serveur mandataire (801), le serveur mandataire (801) convertissant des paquets pour implémenter une communication entre l'hôte patrimonial et le nouvel hôte ; et
le serveur mandataire (801) est configuré pour recevoir le nouveau paquet; obtenir une adresse IPv6 de l'hôte de destination (803) selon l'ID d'hôte de l'hôte de destination (803) ; convertir le nouveau paquet en un second paquet, le second paquet étant un paquet patrimonial, où une adresse de destination du paquet patrimonial est l'adresse IPv6 de l'hôte de destination (803), et une adresse source est l'ID d'hôte de l'hôte source (802) ; et envoyer le paquet patrimonial à l'hôte de destination (803) dans un réseau qui couvre l'hôte de destination (803).

9. Serveur mandataire comprenant :
un module de réception (901), configuré pour recevoir un premier paquet envoyé par un hôte source dans un réseau qui couvre l'hôte source, où le premier paquet est un paquet patrimonial qui achemine une adresse IPv6 de l'hôte source et une ID d'hôte d'un hôte de destination lorsque l'hôte source est un hôte patrimonial, l'hôte de destination est un nouvel hôte ; l'hôte patrimonial est un hôte de protocole Internet version 6, IPv6, et le nouvel hôte supporte un protocole pour séparer une identité d'hôte, ID, d'un localisateur d'hôte ;
un module d'obtention, configuré pour obtenir une ID d'hôte de l'hôte source, un localisateur de l'hôte source, et un localisateur de l'hôte de destination conformément à l'adresse IPv6 de l'hôte source et à l'ID d'hôte de l'hôte de destination, où le localisateur de l'hôte source est une adresse IPv6 routable du serveur mandataire, le serveur mandataire convertissant des paquets pour implémenter une communication entre l'hôte patrimonial et le nouvel hôte ;
un module de conversion (902), configuré pour convertir le premier paquet en un second paquet compatible avec l'hôte de destination, où le second paquet est un nouveau paquet qui achemine l'ID d'hôte de l'hôte source, le localisateur de l'hôte source, l'ID d'hôte de l'hôte de destination et le localisateur de l'hôte de destination ; et
un module d'envoi (903), configuré pour envoyer le second paquet à l'hôte de destination dans un réseau qui couvre l'hôte de destination.

10. Serveur mandataire selon la revendication 9, dans lequel le module d'obtention comprend :
une première unité de recherche, configurée pour rechercher dans une table de mappage de localisateur d'ID, ILM, locale un localisateur correspondant à l'ID d'hôte de l'hôte de destination ; si aucun localisateur correspondant n'est trouvé, rechercher dans un serveur ILM le localisateur correspondant à l'ID d'hôte de l'hôte de destination ;
une première unité d'allocation, configurée pour allouer une ID d'hôte temporaire à l'hôte source comme ID d'hôte de l'hôte source ; et
une première unité d'obtention, configurée pour utiliser l'adresse IPv6 routable du serveur mandataire dans le réseau qui couvre l'hôte de destination comme localisateur de l'hôte source ;
où la première unité d'allocation comprend :
une première sous-unité de mise en mémoire tampon, configurée pour placer en mémoire tampon une relation de mappage entre une adresse IPv6 de l'hôte source et l'ID de l'hôte source allouée par la première unité d'allocation dans la table ILM locale.

11. Serveur mandataire selon la revendication 9, dans lequel le module d'envoi (903) comprend :
une unité de réponse, configurée pour envoyer un paquet de réponse depuis l'hôte de destination vers l'hôte source.

12. Serveur mandataire comprenant :
un module de réception (901), configuré pour recevoir un premier paquet envoyé par un hôte source dans un réseau qui couvre l'hôte source, où le premier paquet est un nouveau paquet qui achemine une ID d'hôte de l'hôte de destination, un localisateur de l'hôte de destination, une ID d'hôte de l'hôte source et un localisateur de l'hôte source lorsque l'hôte source est un nouvel hôte et l'hôte de destination est un hôte patrimonial, où le localisateur de l'hôte de destination est une adresse IPv6 routable du serveur mandataire, le serveur mandataire convertissant des paquets pour implémenter une communication entre l'hôte patrimonial et le nouvel hôte ;
un module d'obtention, configuré pour obtenir une adresse IPv6 de l'hôte de destination conformément à l'ID d'hôte de l'hôte de destination ;
un second module de conversion, configuré pour convertir le nouveau paquet en un second paquet, le second paquet étant un paquet patrimonial qui achemine l'adresse IPv6 de l'hôte de destination et l'ID d'hôte de l'hôte source ; et
un module d'envoi, configuré pour envoyer le paquet patrimonial à l'hôte de destination dans un réseau qui couvre l'hôte de destination.

13. Serveur mandataire selon la revendication 12, dans lequel le module d'obtention comprend :
une seconde unité de recherche, configurée pour rechercher dans une table de mappage de localisateur d'ID, ILM, locale l'adresse IPv6 de l'hôte de destination conformément à l'ID d'hôte de l'hôte de destination ; et
une deuxième unité de mise en mémoire tampon, configurée pour placer en mémoire tampon une relation de mappage entre l'ID d'hôte de l'hôte source et le localisateur de l'hôte source dans la table ILM locale.

14. Serveur mandataire selon la revendication 12, dans lequel le module de réception comprend :
une seconde unité d'allocation, configurée pour allouer une ID d'hôte fixe à l'hôte de destination comme ID d'hôte de l'hôte de destination, et enregistrer une relation de mappage entre un nom d'hôte de l'hôte de destination et l'ID d'hôte de l'hôte de destination avec un serveur de système de noms de domaine, DNS ;
une seconde unité d'obtention, configurée pour utiliser l'adresse IPv6 routable du serveur mandataire dans le réseau qui couvre l'hôte source comme localisateur de l'hôte de destination, et enregistrer une relation de mappage entre l'ID d'hôte de l'hôte de destination et le localisateur de l'hôte de destination avec un serveur de mappage de localisateur d'ID, ILM ; et
une troisième unité de mise en mémoire tampon, configurée pour placer en mémoire tampon une relation de mappage entre l'ID d'hôte de l'hôte de destination et l'adresse IPv6 de l'hôte de destination dans une table ILM locale.
